# EUROPÄISCHE PATENTANMELDUNG

(11) **EP 0 855 537 A1**
(43) Veröffentlichungstag der Anmeldung: **29.07.1998**
(21) Anmeldenummer: 97122378.9
(22) Anmeldetag: 18.12.1997
(51) Int. Cl.: F16G 3/02

(54) **Kupplungsstab**

(30) Priorität: 22.01.1997 DE 19702005
(71) Anmelder: GORO S.A., F-30340 Saint Privat des Vieux (FR)
(72) Erfinder: Schick, Jean-Francois, F-30380 Saint Christol les Ales (FR); Longis, Fabrice, F-30360 Vezenobre (FR)
(74) Vertreter: Honke, Manfred, Dr.-Ing.

(57) **Zusammenfassung**

Es handelt sich um einen Kupplungsstab (1) für Riemenverbinder, mit einer biegsamen Stabachse (2) und einem schraubenwendelförmigen Stabmantel (3) aus einem verschleißfesten Hartmaterial, so daß ein hochbiegsamer Kupplungsstab entsteht, der sich einerseits durch hohe Verschleißfestigkeit und andererseits durch hohe Verformungsfähigkeit auszeichnet, so daß eine lange Lebensdauer gewährleistet ist.

## Beschreibung

Die Erfindung betrifft einen Kupplungsstab für gelenkig ineinandergreifende Scharnierbögen von Riemenverbindern zum Verbinden der Bandenden von Transportbändern, mit einer biegsamen Stabachse und einem die Stabachse schraubenwendelförmig umgebenden Stabmantel.

Es ist ein Kupplungsstab für Riemenverbinder zum Verbinden der Bandenden von Transportbändern bekannt, bei welchem Kernstücke definierter Länge im Inneren von mindestens einem Hüllelement angeordnet sind. Bei diesem bekannten Kupplungsstab besteht das Hüllelement aus einem relativ weichen, sich während des Betriebes verformenden Werkstoff, während die Kernstücke eine derartige Länge aufweisen, daß sie sich jeweils durch mehr als zwei Scharnierbögen der Riemenverbinder erstrecken. Bei dieser Ausführungsform soll das Hüllelement nur zur Herstellung des stabförmigen Gebildes und zum Einführen der Kernstücke in den Scharnierbogenbereich der Riemenverbinder dienen. Jedoch ist das Hüllelement zur Aufnahme der auftretenden Beanspruchungen nicht in der Lage, da es aus einem relativ weichen und sich während des Betriebes verformenden Werkstoff besteht. Vielmehr sollen die auftretenden Beanspruchungen ausschließlich von den Kernstücken übertragen werden. Das kann jedoch schon deshalb nicht gelingen, weil die zwischen den Scharnierbögen der Riemenverbinder und dem Kupplungsstab in ganz erheblichem Maße auftretenden Verschleißbeanspruchungen zwangsläufig zu einer alsbaldigen Beschädigung und schließlich Zerstörung des weichen Hüllelementes führen müssen. Dann geht auch die Lagesicherung der Kernstücke verloren (vergl. DE 44 16 079).

Der Erfindung liegt die Aufgabe zugrunde, einen Kupplungsstab der eingangs beschriebenen Ausführungsform zu schaffen, der sich durch hohe Anpassungsfähigkeit an die auftretenden Transportbandbewegungen und lange Lebensdauer auszeichnet.

Diese Aufgabe löst die Erfindung bei einem gattungsgemäßen Kupplungsstab dadurch, daß der Stabmantel aus einem verschleißfesten Hartmaterial besteht und die Stabachse unmittelbar umgibt. - Diese Maßnahmen der Erfindung haben zur Folge, daß sich der Kupplungsstab durch hohe Anpassungfähigkeit an die im Betrieb auftretenden Beanspruchungen und Verformungen ebenso auszeichnet wie durch eine hohe Verschleißfestigkeit. Denn einerseits läßt sich eine hochbiegsame Stabachse verwirklichen, während andererseits der schraubenwendelförmig gliederartige Stabmantel aus einem besonders verschleißfesten Material besteht und dennoch beide den Biegebewegungen der Stabachse unschwer folgen können, ohne daß eine mechanische Trennung zwischen Stabachse und Stabmantel zu befürchten ist. Tatsächlich ist der erfindungsgemäße Kupplungsstab derart biegsam, daß nicht nur eine trog- oder muldenförmige Biegung, sondern selbst eine nahezu 180°-Biegung einwandfrei von dem Kupplungsstab aufgenommen werden kann. Durch die Anpassungsfähigkeit des erfindungsgemäßen Kupplungsstabes an die wechselnden Verformungen des umlaufenden Transportbandes wird zugleich eine schonende Bandbehandlung im Bereich der miteinander verbundenen Bandenden erreicht, werden also solche Bandbeanspruchungen vermieden, die sonst aus der scharnierartigen Bandverbindung unter Verwendung von einerseits Riemenverbindern und andererseits eines gemeinsamen Kupplungsstabes resultieren. - Im Ergebnis wird nicht nur die Lebensdauer des erfindungsgemäßen Kupplungsstabes, sondern der Verbindung eines umlaufenden endlosen Transportbandes im ganzen erheblich erhöht.

Weitere erfindungswesentliche Merkmale sind im folgenden aufgeführt. So schlägt die Erfindung vor, und diesem Vorschlag kommt selbständige Bedeutung zu, daß der schraubenwendelförmige Stabmantel aus einem austenitischen Mangan-Hartstahl besteht, z. B. aus einem Mangan-Hartstahl X 120 Mn 12 mit
- C: 1,10 bis 1,30 %
- Si: 0,30 bis 0,50 %
- Mn: 12,00 bis 13,00 %
- P: < 0,10 %
- S: < 0,04 %.

Nach einer anderen Ausführungsform besteht der Stabmantel aus einem Wolframstahl mit einem vorgegebenen, nämlich erhöhten Kohlenstoffgehalt. Ein erhöhter Kohlenstoff ist bei einem solchen Wolframstahl erforderlich, damit der vorhandene Kohlenstoff nicht vollständig durch das Wolfram zu Karbid abgebunden wird. Tatsächlich darf die Grundmasse des Wolframstahls nicht kohlenstofffrei werden, um eine hinreichende Härtbarkeit zu erhalten. - Der Stabmantel weist vorzugsweise eine glatte Oberfläche auf.

Die Stabachse besteht zweckmäßigerweise aus einem weichen bzw. flexiblen Stahlkabel oder Kabel aus entsprechenden Stahllitzen. Es besteht aber auch die Möglichkeit, daß die Stabachse aus korrosionsbeständigen Metallen, Kunststoffmaterialien, Textilmaterialien oder deren Mischungen besteht, jedenfalls unschwer als hochbiegsame und nahezu flexible Stabachse hergestellt werden kann.

Im folgenden wird die Erfindung anhand einer lediglich ein Ausführungsbeispiel darstellenden Zeichnung näher erläutert; es zeigen:

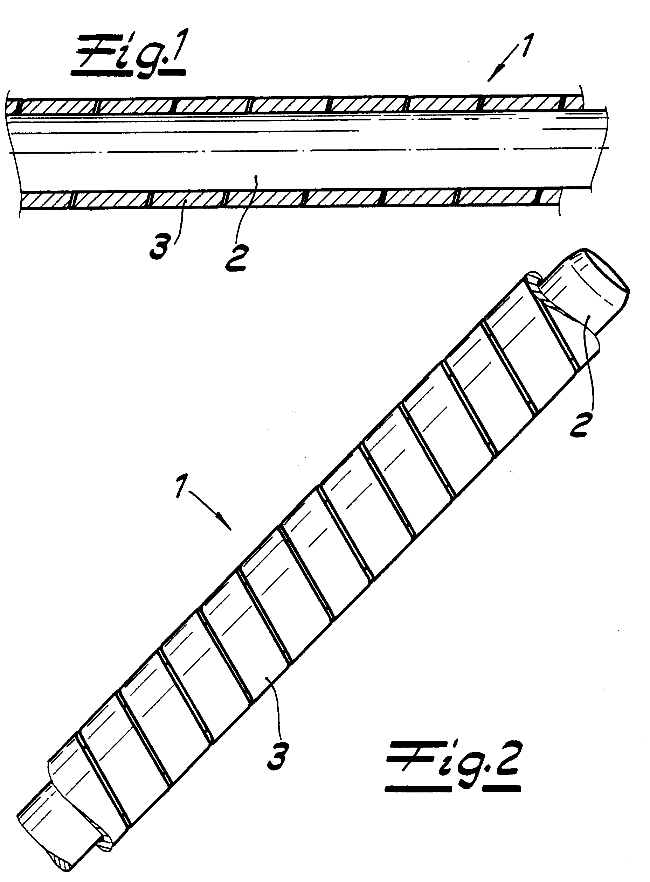

- Fig. 1: ausschnittsweise einen erfindungsgemäßen Kupplungsstab im Axialschnitt, und
- Fig. 2: eine perspektivische Darstellung des Gegenstandes nach Fig. 1,

In den Figuren ist ein Kupplungsstab 1 für Riemenverbinder mit U-förmigen Verbinderklammern zum Verbinden der Bandenden von Transportbändern dargestellt, wobei die Verbinderklammern Scharnierbögen aufweisen und der Kupplungsstab 1 durch die gelenkig ineinandergreifenden Scharnierbögen von zwei Riemenverbindern hindurchgeführt ist. Der Kupplungsstab 1 weist eine biegsame Stabachse 2 und einen die Stabachse 2 unmittelbar und schraubenwendelförmig umgebenden Stabmantel 3 auf. Der Stabmantel 3 besteht aus einem verschleißfesten Hartmaterial. Nach dem Ausführungsbeispiel besteht der Stabmantel 3 aus einem austenitischen Mangan-Hartstahl. Die Stabachse 2 ist nach dem Ausführungsbeispiel als ein weiches und weitgehend flexibles Stahlkabel ausgeführt.

## Patentansprüche

1. Kupplungsstab für gelenkig ineinandergreifende Scharnierbögen von Riemenverbindern zum Verbinden der Bandenden von Transportbändern, mit einer biegsamen Stabachse und einem die Stabachse schraubenwendelförmig umgebenden Stabmantel, **dadurch gekennzeichnet,** daß der Stabmantel (3) aus einem verschleißfesten Hartmaterial besteht.

2. Kupplungsstab nach Anspruch 1, dadurch gekennzeichnet, daß der Stabmantel (3) aus einem austenitischen ManganHartstahl besteht.

3. Kupplungsstab nach Anspruch 1, dadurch gekennzeichnet, daß der Stabmantel (3) aus einem Wolframstahl mit einem vorgegebenen Kohlenstoffgehalt besteht.

4. Kupplungsstab nach einem der Ansprüche 1 bis 3, dadurch gekennzeichnet, daß die Stabachse (2) aus einem Stahlkabel oder Kabel aus Stahllitzen besteht.
